# EUROPÄISCHE PATENTSCHRIFT

(11) **EP 0 521 528 B1**
(45) Veröffentlichungstag und Bekanntmachung des Hinweises auf die Patenterteilung: **04.10.1995**
(21) Anmeldenummer: 92111363.5
(22) Anmeldetag: 03.07.1992
(51) Int. Cl.: B60S 1/08

(54) **Elektrischer Motor, insbesondere Scheibenwischermotor eines Kraftfahrzeugs**
Electric motor, in particular windshield wiper motor of an automotive vehicle
Moteur électrique, notamment moteur d'essuie-glace de véhicule automobile

(30) Priorität: 05.07.1991 DE 4122293
(43) Veröffentlichungstag der Anmeldung: 07.01.1993
(73) Patentinhaber: ITT Automotive Europe GmbH, 60488 Frankfurt am Main (DE)
(72) Erfinder: Bruhn, Rainer, W-75 Karlsruhe 21 (DE); Walther, Bernd, W-7120 Bietigheim-Bissingen (DE)

(56) Entgegenhaltungen:
- DE-A- 2 707 288
- DE-A- 3 542 632
- DE-A- 3 736 388
- GB-A- 2 079 540
- US-A- 4 350 938

## Beschreibung

Die Erfindung bezieht sich auf einen elektrischen Motor, insbesondere zum Antrieb mindestens eines Scheibenwischers eines Kraftfahrzeugs, dessen Motorwelle ein drehbar in einem Gehäuse gelagertes Zahnrad des Wischerantriebs antreibt, welches konzentrische, elektrisch leitende Kontaktbahnen zum Stillsetzen des Motors in vorgegebener Stellung der Wischer-Antriebswelle trägt, denen je eine Schleiffeder zugeordnet ist, wobei die Schleiffedern und Entstörmittel sowie elektrische Anschlußelemente für den Motor und die Entstörmittel an einem elektrisch nichtleitenden Träger vormontierbar sind. Ein solcher Elektromotor bzw. Scheibenwischer-Antrieb ist bspw. durch die DE-A-35 42 632 bekannt geworden. Zu Montagezwecken ist der gehäuseartige, aus Kunststoff bestehende Träger klappbar ausgebildet. Nach der Montage der elektrischen Anschlußelemente, der Schleifkontakte und der Entstörmittel wird das Gehäuse zusammengeklappt und dann durch ein geeignete Öffnung des Gehäuses in letzteres eingeschoben. Sowohl die Montage der vormontierbaren Einheit als auch die Anbringung der letzteren am Gehäuse ist relativ aufwendig.

Aus der GB-A-20 79 540, die den Oberbegriff des Anspruchs definiert, ist ein Scheibenwischerantrieb bekannt, bei dem ebenfalls eine Vorrichtung vorgesehen ist, mit der Antriebsmotor selbsttätig abgeschaltet werden kann. Diese Vorrichtung besteht aus Schleifkontakten sowie konzentrisch angeordneten Kontaktbahnen mit Unterbrechungen. Die Schleifkontakte sind auf einer Trägerplatte angeordnet, die oberhalb eines Schneckenrades angeordnet wird, wobei das Schneckenrad die Kontaktbahnen trägt. Die Schleifkontakte sind auf der Seite der Trägerplatte befestigt, die dem Schneckenrad zugewandt ist. Die Trägerplatte selbst bildet eine geschlossene Fläche.

Es liegt infolgedessen die Aufgabe vor, einen elektrischen Motor der eingangs genannten Art so weiterzubilden, daß ein insgesamt geringerer Arbeitsaufwand und damit eine Kostenreduzierung entsteht.

Zur Lösung dieser Aufgabe wird erfindungsgemäß vorgeschlagen, daß der elektrische Motor gemäß dem Oberbegriff des Anspruchs 1 entsprechend dem kennzeichnenden Teil dieses Anspruchs ausgebildet ist. Sämtliche stromführenden Teile lassen sich in einfacher Weise an dem plattenförmigen Träger befestigen, wobei man sowohl dessen Oberseite als auch Unterseite für die Montage ohne weiteres zur Verfügung hat.

Die Größe und form der Platte richtet sich nach dem vorhandenen Platz im Gehäuseboden. Dieses Gehäuse nimmt zumindest das Zahnrad mit den Kontaktbahnen auf. Desweiteren wird der Motor daran angeflanscht und außerdem ist noch eine Lagerung für die Antriebswelle vorhanden. Die Verbindung zwischen dem Zahnrad und der Antriebswelle kann in bekannter Weise erfolgen, bspw. über ein kniehebelartiges Zwischenelement, das einerseits drehfest mit der Wischerarm-Antriebsachse und andererseits mit einem exzentrischen Zapfen des Zahnrades gelenkig verbunden ist.

Der Träger und sämtliche daran gehaltenen, den elektrischen Strom leitenden Teile befinden sich geschützt innerhalb des Gehäuses. Nach außen ragen lediglich die elektrischen Anschlußelemente heraus, wobei man das Durchführen durch das Gehäuse, insbesondere den Gehäuseboden, spielfrei vornehmen kann, so daß an der betreffenden Stelle weder Staub noch Feuchtigkeit eindringen kann.

Weil sich die Leiterelemente diesseits und die Schleiffedern sowie die Entstörmittel jenseits des plattenförmigen Trägers befinden, bildet der dazwischenliegende Träger eine wirksame Isolation. Eine elektrisch leitende Verbindung ist nur örtlich an den hierfür vorgesehenen Stellen vorhanden.

Eine Weiterbildung der Erfindung sieht vor, daß der plattenförmige Träger im wesentlichen als Ringscheibe ausgebildet ist und das Gehäuse in diesem Bereich eine kreiszylindrische Innenwandung entsprechender Größe aufweist. Der Träger kann bündig an der Innenwandung des Gehäuses anliegen und so den zwischen ihm und dem Gehäuseboden liegenden Raum abdichten. Um eine korrekte Montage zu gewährleisten sind am Umfang mehrere formschlüssige Verbindungen vorgesehen, die eine Montage nur in einer bestimmten Drehlage des Trägers gegenüber dem Gehäuse zulassen. So kann man bspw. gemäß dem Ausführungsbeispiel am Träger drei jeweils um 90° gegeneinander versetzte, nach außen vorstehende Vorsprungpaare vorsehen, die eine Aufnahme für jeweils eine radial vorstehende Zunge des Gehäuses bilden. Die zentrische Bohrung des Trägers gewährleistet den Durchtritt der Lagerwelle des Zahnrads. Dieses wird im übrigen von einer Schnecke der Ankerwelle oder einer Verlängerung der letzteren angetrieben. Aus diesem Grunde stehen die Ankerwelle und die Lagerwelle des Zahnrades meist senkrecht zueinander mit einem etwa dem Radius des Zahnrads entsprechenden Seitenabstand.

Eine weitere Ausgestaltung der Erfindung ist dadurch gekennzeichnet, daß sich an der oberen Fläche des Trägers axial vorstehende, insbesondere angeformte Aufnahmen für die Entstörmittel, das Befestigungsende jeder Schleiffeder und die elektrischen Anschlußelemente befinden. Form und Größe jeder Aufnahme richtet sich nach den Abmessungen und der äußeren Gestalt der Entstörmittel bzw. des jeweiligen Schleiffeder-Befestigungsendes. Hieraus wird deutlich, daß die axiale Erstreckung der Aufnahmen für die Entstörmittel größer ist als diejenige, bspw. für das Schleiffeder-Befestigungsende, weil die Schleiffedern eine geringe Dicke haben. Außerdem ergibt sich hieraus zumindest indirekt, daß der Boden nicht notwendigerweise ein durchgehend ebener Boden sein muß, vielmehr wird er zur Anpassung an die übergriffenen Teile und zur Gewichts- sowie Materialeinsparung entsprechend gestaltet.

Eine weitere Ausführungsform der Erfindung kennzeichnet sich dadurch, daß die Aufnahmen für die elektrischen Anschlußelemente zu einer Steckerleiste zusammengefaßt sind, über deren freies Ende die als Zungen gestalteten Anschlußelemente axial vorstehen. Das freie Ende dieser Steckerleiste durchsetzt einen formlich angepaßten Schlitz im Boden des Gehäuses, wobei eine stramme Passung vorgesehen sein kann, damit einerseits Staubdichtheit gewährleistet ist und andererseits über diese Verbindung auch ein Festhalten des Trägers im Gehäuse erreicht wird. Die Trägerleiste selbst muß über den Boden nicht oder nicht wesentlich vorstehen, während selbstverständlich die elektrischen Anschlußelemente die Steckerleiste soweit überragen, daß eine geeignete Steckkupplung bequem und elektrisch sicher leitend aufgesteckt werden kann. Anspruch 5 beschreibt die entsprechende Ausbildung.

Eine besonders bevorzugte Variante der Erfindung besteht darin, daß sämtliche Leiterelemente und die elektrischen Anschlußelemente aus einer einzigen Blechplatte ausgestanzt sind, wobei die Leiterelemente des losen Stanzteils über durchtrennbare Stege miteinander verbunden sind. Hierzu verwendet man bspw. Kupferblech o.dgl. Nach dem Ausstanzen und ggf. Umbiegen ausgestanzter Lappen wird das Stanzteil fest mit dem bspw. als Kunststoff-Spritzteil ausgebildeten Träger verbunden. Bei der Befestigung oder danach werden die Stege durchtrennt, wodurch man auch eine elektrische Trennung der elektrischen Elemente erreicht, die miteinander leitend nicht verbunden sein dürfen. Hierbei muß natürlich darauf geachtet werden, daß nach dem Durchtrennen der Stege jedes hierdurch entstandene separate Teil für sich allein am Träger sicher festgehalten ist. Im übrigen wird für die Verbindung insbesondere ein Annieten bevorzugt.

Insoweit sieht eine Weiterbildung der Erfindung vor, daß jedes Leiterelement wenigstens ein Befestigungsloch aufweist, in das ein Befestigungselement, insbesondere ein angeformter Befestigungszapfen des Trägers eingreift, dessen vorstehendes Ende zu einem Nietkopf o.dgl. verformt ist. Die Befestigungszapfen erleichtern die Montage und das genaue Auffinden der für die Funktion notwendigen Stellung jedes Leiterelements.

Desweiteren ist es sehr vorteilhaft, daß in montierter Lage gegen den Gehäuseboden vorstehende umgebogene Lappen die elektrischen Anschlußelemente bilden. In montierter Lage gegen den Gehäuseboden vorstehende Lappen können auch elektrische Verbindungselemente zu den Schleiffedern bilden, wobei die Lappen vorzugsweise jeweils einen Durchbruch des befestigten Endes der zugeordneten Schleiffeder durchdringen. Dies trägt zur weiteren Verringerung der Teilezahl, zur Vereinfachung der Montage und zur zusätzlichen Sicherstellung der Funktionsfähigkeit bei.

Als besonders günstig hat es sich erwiesen, wenn gemäß Anspruch 10 eine Schleiffeder mit ihrem Befestigungsende von der oberen Fläche des Trägers aus durch diesen hindurchtritt. Die elektrische Verbindung zu einem Leiterelement kann dann leicht auf der Seite des Trägers hergestellt werden, auf der sich das Leiterelement befindet. Besondere Ausgestaltungen dieser elektrischen Verbindung enthalten die Ansprüche 11 bis 13. Wenn die elektrischen Verbindungen zwischen den Entstörmitteln usw. und den Leiterelementen gemäß Anspruch 14 ausgebildet sind, können sich dann alle elektrischen Verbindungen auf derselben Seite des Trägers befinden. Dies ist von Vorteil besonders dann, wenn die Verbindungsstellen zusätzlich gelötet werden.

Die Erfindung wird nachstehend anhand der Zeichnung näher erläutert. Die Zeichnung zeigt zwei Ausführungsbeispiele der Erfindung. Hierbei stellen dar:
- Figur 1: das erste Ausführungsbeispiel in einer Draufsicht auf das Gehäuse zum Anflanschen des elektrischen Motors, wobei der Deutlichkeit wegen der Gehäuseboden im zylindrischen Bereich weggelassen wurde,
- Figur 2: einen Schnitt gemäß der Linie II-II der Figur 1,
- Figur 3: eine Draufsicht auf die in Figur 1 eingebaute Einheit in vergrößertem Maßstab,
- Figur 4: einen Schnitt gemäß der Linie IV-IV der Figur 3,
- Figur 5: eine Draufsicht auf den Träger der Figur 3,
- Figur 6: einen Schnitt gemäß der Linie VI-VI der Figur 5,
- Figur 7: eine Draufsicht auf das Stanzteil mit den Leiterelementen und Anschlußelementen,
- Figur 8: einen Schnitt gemäß der Linie VIII-VIII der Figur 7 und
- Figur 9: einen Teilschnitt durch den Träger des zweiten Ausführungsbeispiels.

Ein dem Prinzip nach bekanntes Gehäuse 1 eines Scheibenwischer-Antriebs für ein Kraftfahrzeug ist mit einem Anschlußflansch 2 ausgestattet, an den das nicht gezeigte Gehäuse des elektrischen Antriebsmotors anmontiert wird.

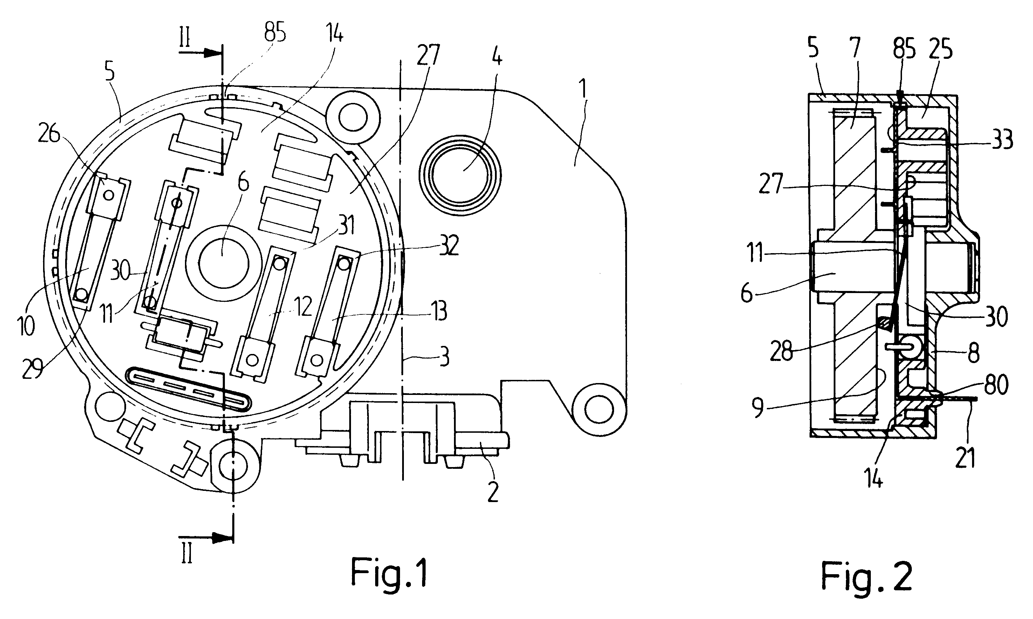

Dieser besitzt eine Antriebswelle, welche durch die geometrische Achse 3 symbolisiert ist. Sie trägt eine Schnecke, welche ein in dem zylindrischen Gehäuseteil 5 um eine Achse 6 drehbares Zahnrad 7 antreibt. Ein ebenfalls nicht gezeigter exzentrischer Zapfen des Zahnrads treibt über bekannte Zwischenglieder, insbesondere einen Kniehebel, die Antriebswelle des Wischerarms an, deren geometrische Achse mit 4 bezeichnet ist. Sie verläuft senkrecht zur Blattebene in Figur 1 und gegenüber der geometrischen Achse 3 nach rechts versetzt. Diese Teile des Scheibenwischer-Antriebs sind dem Prinzip nach bekannt und es bedarf insoweit keiner näheren Erläuterung.

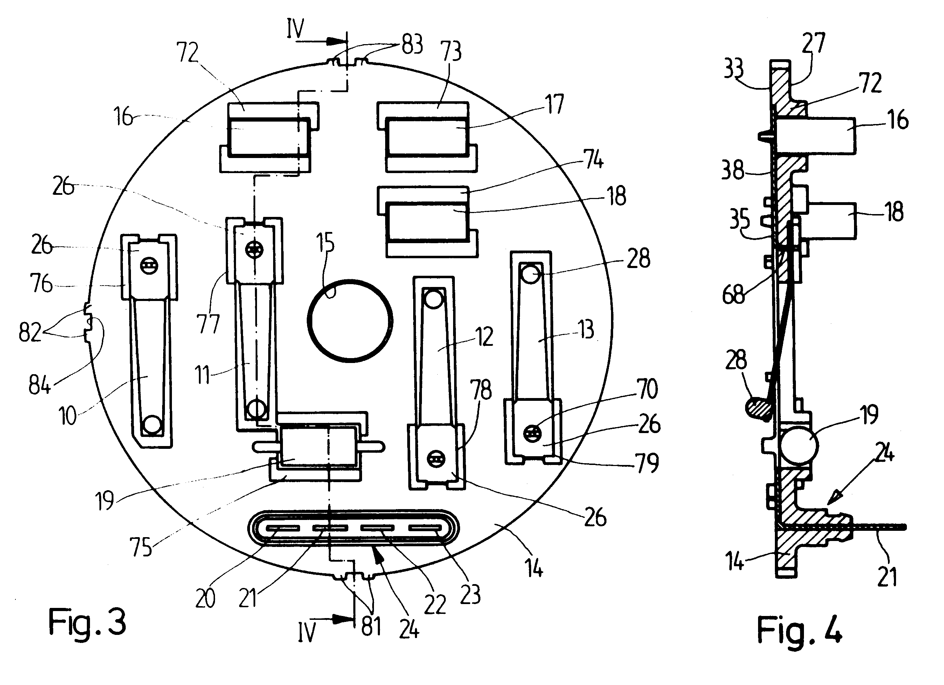

Der Wischerarm soll eine genau vorgegebene Parkstellung und Schlußstellung einnehmen, bei welcher das Wischerblatt den Blick durch die Frontscheibe nicht oder allenfalls geringfügig stört. Um dies zu erreichen, befinden sich an der gegen den Boden 8 des Gehäuses 1 weisenden oberen Fläche 9 des Zahnrads 7 bekannte und aus diesem Grunde nicht dargestellte elektrisch leitende Kontaktbahnen. Jeder ist eine Schleiffeder 10 bis 13 zugeordnet. Wie man besonders gut den Figuren 3 und 4 entnehmen kann, sind die Schleiffedern 10 bis 13 an einem Träger 14 aus elektrisch nichtleitendem Material, insbesondere aus Kunststoff, montiert. Dieser hat gemäß Figur 3 im wesentlichen die Gestalt eines Kreisringes mit zentrischer Bohrung 15. Am Träger 14 sind außerdem noch Entstörmittel montiert, wobei es sich beim Ausführungsbeispiel um drei Kondensatoren 16, 17 und 18 sowie eine Diode 19 handelt. Desweiteren befinden sich am Träger 14 vier Anschlußelemente 20 bis 23, deren freie überstehende Enden flache Anschlußzungen bilden. Gemäß Figur 3 stehen diese in seitlichem Abstand unmittelbar nebeneinander, wodurch eine flache Steckerleiste 24 entsteht. Über eine passende Steckkupplung kann der elektrische Anschluß für sämtliche elektrischen Elemente und Leitungen der in den Figuren 3 und 4 gezeichneten Einheit hergestellt werden.

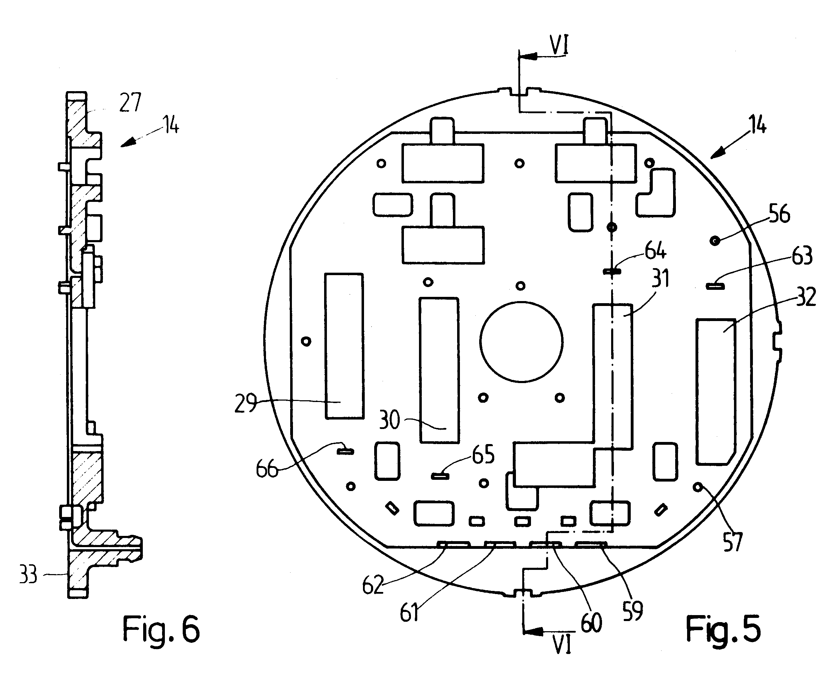

Gemäß Figur 2 befindet sich diese Einheit im Zwischenraum 25 zwischen dem Boden 8 des Gehäuses 1 und dem Zahnrad 7. Sie wird dort allerdings erst dann eingesetzt, wenn sie komplett vormontiert ist. In montiertem Zustand weisen die Entstörmittel gegen den Boden 8. Auch die Befestigungsenden 26 der Schleiffedern 10 bis 13 befinden sich an der oberen Fläche 27 des Trägers 14. Damit die freien Enden der Schleiffedern bzw. der daran angebrachte Kontakt 28 mit der zugeordneten Kontaktbahn in elektrisch leitende Verbindung kommen kann, sind am Träger 14 vier schlitzartige, rechteckige Durchbrüche 29 bis 32 angebracht. Sie sind besonders gut in Figur 5 zu sehen.

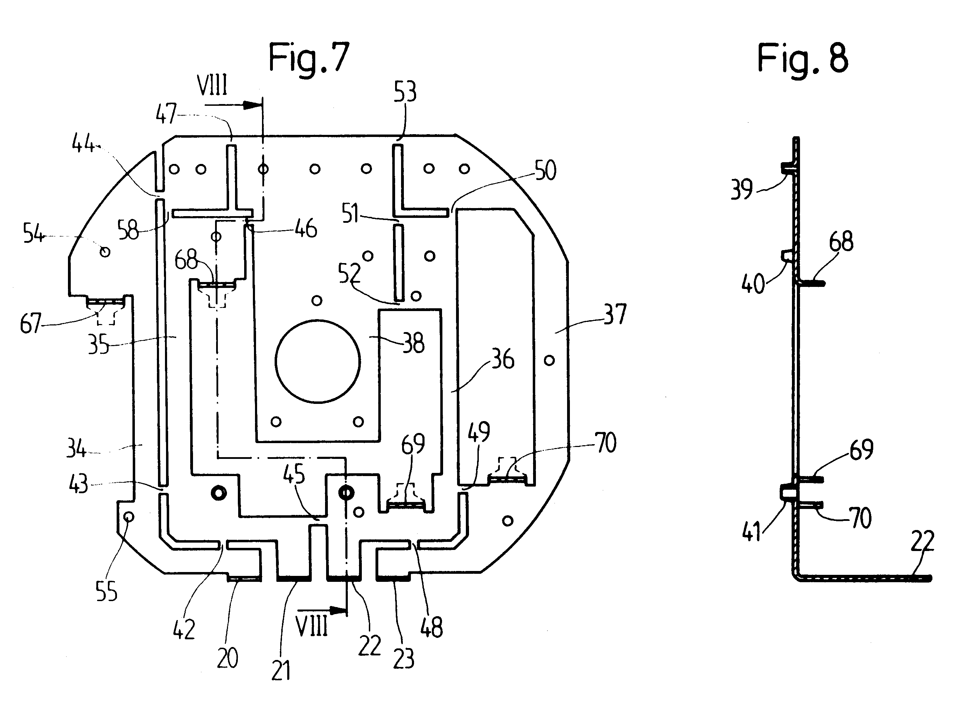

An der unteren Fläche 33 des Trägers 14 befinden sich ebene, aus Blech gefertigte Leiterelemente, welche für die notwendige Verbindung der elektrischen Komponenten untereinander und mit der Masse sorgen. Beim Ausführungsbeispiel sind es gemäß Figur 7 fünf Leiterelemente 34 bis 38.

Gemäß Figur 7 sind sämtliche elektrische Leiterelemente, aber auch die einstückig angeformten elektrischen Anschlußelemente 20 bis 23 einstückig aus einem Blech ausgestanzt, wobei einzelne Lappen gemäß Figur 8 nach dem Austanzen nach oben oder unten hin umgebogen wurden. Außerdem zeigt Figur 8, daß außer den umgebogenen Lappen auch noch hülsenförmige Ausstülpungen vorhanden sein können, von denen in Figur 8 drei Stück, nämlich die Ausstülpungen 39, 40 und 41 zu sehen sind. In diese kann man elektrische Leitungen der Entstörmittel einstecken und in bekannter Weise z.B. durch Verquetschen oder Verlöten die sichere Verbindung damit herstellen.

Beim Ausstanzen sind die elektrischen Leiterelemente zunächst noch über durchtrennbare Stege miteinander verbunden. Sie müssen nicht notwendigerweise alle durchtrennt werden, weswegen man je nach dem, welche Stege man durchtrennt, verschieden gestaltete und auch verschieden viele elektrische Leiterelemente erhält. Beim Ausführungsbeispiel werden zur Bildung des ersten Leiterelements 34 die Stege 42, 43 und 44 durchtrennt. Das zweite Leiterelement 35 entsteht nach Durchtrennung der Stege 45, 46 und 47. Das dritte Leiterelement 36 erhält man nach Durchtrennung der Stege 48, 49, 50, 51 und 52. Wenn man auch noch den Steg 53 durchtrennt, so erhält man das vierte Leiterelement 37 und das fünfte Leiterelement 38. Letzteres ist das Masseelement.

Jedes elektrische Leiterelement hat wenigstens zwei Befestigungslöcher. Es sind in Figur 7 der Deutlichkeit wegen lediglich die beiden Befestigungslöcher 54 und 55 mit Bezugszahlen versehen. Jedem ist ein zapfenförmiges Befestigungselement zugeordnet, welches einstückig an den Träger 14 angeformt ist. Diese Befestigungselemente weisen in Figur 5 nach oben. In die beiden Befestigungslöcher 54 und 55 greifen die bspw. mit Bezugszahlen 56 und 57 bezeichneten Befestigungselemente ein. Beim Zusammenfügen des Trägers 14 der Figur 5 und des Stanzteils der Figur 7 muß letzteres um 180° gewendet werden, d.h. die sichtbare Fläche der Figur 7 liegt auf der sichtbaren Fläche der Figur 5 auf. Die Befestigungselemente können bspw. einen Durchmesser von ca. 1mm haben. Die Befestigungslöcher haben einen vergleichbaren Durchmesser. Die Länge der Befestigungselemente ist so gewählt, daß ihre freien Enden über die Befestigungslöcher etwas vorstehen, so daß man sie anschließend verformen kann, wobei sie eine Nietkopf bilden. Dieser hält dann den Träger 14 und das Stanzteil der Figur 7 fest zusammen. Nach der festen Verbindung oder evtl. auch währenddessen werden die vorgesehenen Stege durchtrennt. Lediglich der Ordnung halber wird noch angemerkt, daß beim Ausführungsbeispiel der Steg 58 nicht durchtrennt wird.

Der Träger 14 (Figur 5) ist mit in Reihe angeordneten Schlitzen 59 bis 62 für den Durchtritt der elektrischen Anschlußelemente 20 bis 23 versehen. Weitere Schlitze 63 bis 66 ermöglichen den Durchtritt von hochgebogenen Lappen 67 bis 70, welche gemäß Figur 8 in gleicher Richtung umgebogen sind, wie die elektrischen Anschlußelemente. Die Lappen 67 bis 70 durchsetzen gemäß bspw. Figur 4 einen Durchbruch am Befestigungsende der zugeordneten Schleiffeder. Das vorstehende Lappenende 70 wird in geeigneter Weise z.B. durch Verstemmen bleibend verformt. Dadurch schafft man dann die feste und elektrisch leitende Verbindung zwischen dem betreffenden elektrischen Leiterelement und seiner Schleiffeder.

Damit die Entstörmittel, also beim Ausführungsbeispiel die Kondensatoren 16 bis 18 und die Diode 19 auf dem Träger 14 einen sicheren Halt haben und sie auch eine vorgegebene Zuordnung zu den Bohrungen bzw. Ausstülpungen 39 bis 41 haben, befinden sich an der oberen Fläche 27 des Trägers 14 axial vorstehende, angeformte Aufnahmen 72 bis 75. Weitere Aufnahmen 76 bis 79 nehmen die Befestigungsenden der Schleiffedern 10 bis 13 auf. Die Aufnahmen 72 bis 75 können das zugeordnete Entstörmittel vollständig umfassen, oder gemäß Figur 3 nur Teile desselben. Letzteres hat den Vorteil eines geringeren Gewichts. Dadurch entstehen im Querschnitt winkelförmige, diagonal gegenüberliegende Wände, welche alle vier Flächen des Kondensators bzw. den Umfang der Diode sicher und rüttelfest halten. Die weiteren Aufnahmen 76 bis 79 können entweder ein geschlossenes U bilden oder ähnlich den Aufnahmen 72 bis 75 in zwei L-förmige, spiegelbildlich angeordnete Elemente unterteilt sein. Zur weiteren Gewichtsreduzierung können noch weitere Unterteilungen vorgenommen werden. Die Steckerleiste 24 bildet eine weitere Aufnahme für die vier elektrischen Anschlußelemente 20 bis 23. Aus Figur 2 ergibt sich, daß die Aufnahmen für die elektrischen Anschlußelemente 20 bis 23 bzw. die Steckerleiste 24 geringfügig über den Boden 8 nach außen vorstehen. Sie dichten einen Schlitz 80 des Bodens 8 ab. Somit befinden sich außerhalb des Gehäuses 1 lediglich die Anschlußzungen bzw. freien Enden der Anschlußelemente 20 bis 23.

Wie bereits erläutert hat der Träger 14 im wesentlichen eine kreisförmige Außenkontur. Über diese stehen lediglich drei Stegpaare 81, 82 und 83 vor, die beim Ausführungsbeispiel jeweils um 90° gegeneinander versetzt sind. Sie bilden jeweils eine Nut 84 (Figur 3). Jeder Nut 84 ist ein Vorsprung 85 des Gehäuses 1 zugeordnet, der gemäß Figur 2 radial in das Gehäuseinnere vorsteht. Man erreicht dadurch eine unverwechselbare Montageposition für die in den Figuren 3 und 4 gezeichnete Einheit. Außerdem ist sie durch die Nuten und Stegpaare auch verdrehfest im Gehäuse 1 gehalten. In axialer Richtung erfolgt zumindest über die Steckerleiste 24 und den Schlitz 80 im Boden 8 des Gehäuses 1 eine sichere Verbindung. Ansonsten entspricht die Innenwandung des Gehäuses 1 bzw. seines zylindrischen Teils 5 dem Außendurchmesser des Trägers 14, so daß beide einigermaßen dicht und rüttelfest miteinander verbunden werden können. Auch kann man zur sicheren Befestigung des Trägers 14 das Gehäuse 1 an einzelnen Stellen verstemmen.

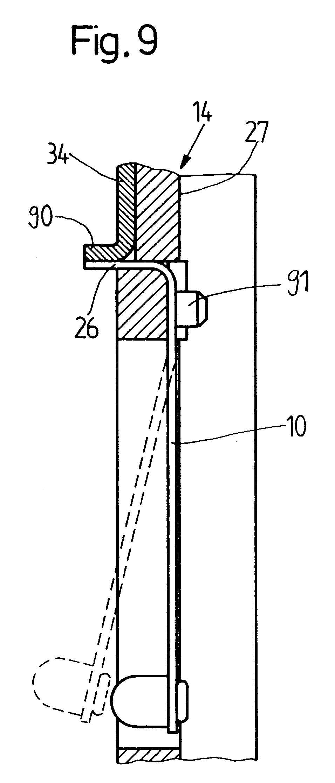

Die Ausfuhrung nach Figur 9 unterscheidet sich von der nach den Figuren 1 bis 8 nur durch die Art der Befestigung der Schleiffedern 10 bis 13, von denen die Schleiffeder 10 in Figur 9 gezeigt sei, und durch die Art der elektrischen Kontaktgabe zwischen den Schleiffedern und den Leiterelementen 34 bis 37, von denen in Figur 9 das Leiterelement 34 gezeigt sei.

Die Schleiffeder 10 tritt mit ihrem Befestigungsende 26 von der oberen Fläche 27 des Trägers 14 durch diesen hindurch und steht über die untere Fläche 33 vor. Vom Leiterelement 34 ist ein Lappen 90 vom Träger 14 weggebogen, an dem das Befestigungsende 26 der Schleiffeder 10 aufgrund seiner Eigenelastizität mit einem gewissen Druck flach anliegt. Die Kontaktstellen zwischen den Schleiffedern und den Leiterelementen befinden sich somit auf derselben Seite des Trägers 14 wie die Kontaktstellen zwischen den Entstörmitteln und den Leiterelementen, so daß alle Kontaktstellen leicht automatisch gelötet werden können. Während dieses Lötvorgangs nehmen die Schleiffedern Positionen ein, wie sie in Figur 9 für die Schleiffeder 10 mit durchgehenden Linien gezeigt ist. Erst nach dem Löten werden die Schleiffedern in die mit strichpunktierten Linien gezeigte Position gebracht.

Zur Befestigung der Schleiffeder 10 am Träger 14 dienen noch ein Zapfen 91, der an dem Träger 14 einstückig angeformt ist und durch ein nicht näher dargestelltes Loch tritt, das sich vor dem abgebogenen und durch den Träger 14 tretenden Abschnitt des Befestigungsendes 26 in letzterem befindet. Der Zapfen 91 wird über der Schleiffeder verformt, so daß er über die Ränder des Loches greift und das Befestigungsende 26 der Schleiffeder niederhält.

Aus dem vorstehenden folgt, daß man bei einem Wischermotor mit Parkstellung den Motoranschluß wesentlich vereinfachen kann. Sämtliche elektrischen Komponenten lassen sich außerhalb des Gehäuses montieren und ihre elektrischen Anschlüße können vor der Montage hergestellt werden. Diese Montage kann ohne weiteres automatisiert werden und dies gilt auch für das Einsetzen der vormontierten Einheit in das Gehäuse 1.

## Patentansprüche

1. Elektrischer Motor, insbesondere zum Antrieb mindestens eines Scheibenwischers eines Kraftfahrzeugs, dessen Motorwelle (3) ein drehbar in einem Gehäuse (1) gelagertes Zahnrad (7) des Wischerantriebs antreibt, welches konzentrische elektrisch leitende Kontaktbahnen zur Aufrechterhaltung der Stromversorgung des Motors bis zu dessen Stillsetzen in vorgegebener Stellung der Wischer-Antriebswelle (4) trägt, denen je eine Schleiffeder (10 bis 13) zugeordnet ist, wobei die Schleiffedern (10 bis 13) und Entstörmittel (16 bis 19) sowie elektrische Anschlußelemente (20 bis 23) für den Motor an einem elektrisch nichtleitenden Träger (14) vormontierbar sind, und wobei sich der im wesentlichen plattenförmige Träger (14) mit den daran vormontierten Schleiffedern (10 bis 13), Anschlußelementen (20 bis 23) und Entstörmitteln (16 bis 19) in einem Zwischenraum (25) zwischen dem Zahnrad (7) und dem Boden (8) des Gehäuses (1) befindet, **dadurch gekennzeichnet,** daß die Basisbereiche der Schleiffedern (10 bis 13) an der gegen den Boden des Gehäuses (8) weisenden oberen Fläche des Trägers (14) angeordnet sind und die Schleiffedern selbst Durchbrüche (29 bis 32) des letzteren durchsetzen, während sich an der unteren Fläche (33) des Trägers (14) ebene, aus Blech gefertigte Leiterelemente (34 bis 38) befinden, mit denen die Entstörmittel (16 bis 19), die Schleiffedern (10 bis 13) und die elektrischen Anschlußelemente (20 bis 23) elektrisch leitend verbunden sind.

2. Motor nach Anspruch 1, dadurch gekennzeichnet, daß der plattenförmige Träger (14) im wesentlichen als Ringscheibe ausgebildet ist, und das Gehäuse (1) in diesem Bereich eine kreiszylindrische Innenwandung entsprechender Größe aufweist.

3. Motor nach Anspruch 1 oder 2, dadurch gekennzeichnet, daß sich an der oberen Fläche (27) des Trägers (14) axial vorstehende, insbesondere angeformte Aufnahmen (24, 72 bis 79) für die Entstörmittel (16 bis 19), das Befestigungsende (26) jeder Schleiffeder (10 bis 13) und die elektrischen Anschlußelemente (20 bis 23) befinden.

4. Motor nach Anspruch 3, dadurch gekennzeichnet, daß die Aufnahmen für die elektrischen Anschlußelemente (20 bis 23) zu einer Steckerleiste (24) zusammengefaßt sind, über deren freies Ende Zungen bildende freie Enden der elektrischen Anschlußelemente (20 bis 23) axial vorstehen.

5. Motor nach Anspruch 3 oder 4, dadurch gekennzeichnet, daß die Aufnahmen für die elektrischen Anschlußelemente (20 bis 23) bzw. die Steckerleiste (24) den Gehäuseboden (8) geringfügig nach außen hin durchsetzen bzw. durchsetzt.

6. Motor nach wenigstens einem der vorhergehenden Ansprüche, dadurch gekennzeichnet, daß sämtliche Leiterelemente (34 bis 38) und die vorzugsweise elektrischen Anschlußelemente (20 bis 23) aus einer einzigen Blechplatte ausgestanzt sind, wobei die Leiterelemente (34 bis 38) des losen Stanzteils über durchtrennbare Stege (42 bis 53, 58) miteinander verbunden sind.

7. Motor nach Anspruch 6, dadurch gekennzeichnet, daß jedes Leiterelement (34 bis 38) wenigstens ein Befestigungsloch (z.B. 54, 55) aufweist, in das ein Befestigungselement (z.B. 56, 57), inbesondere ein angeformter Befestigungszapfen des Trägers (14) eingreift, dessen vorstehendes Ende zu einem Nietkopf o.dgl. verformt ist.

8. Motor nach Anspruch 6 oder 7, dadurch gekennzeichnet, daß in montierter Lage gegen den Gehäuseboden (8) vorstehende umgebogene Lappen der Leiterelemente (34 bis 38) die elektrischen Anschlußelemente (20 bis 23) bilden.

9. Motor nach einem der Ansprüche 6 bis 8, dadurch gekennzeichnet, daß in montierter Lage gegen den Gehäuseboden (8) vorstehende Lappen (67 bis 70) elektrische Verbindungselemente zu den Schleiffedern (10 bis 13) bilden, wobei die Lappen (67 bis 70) vorzugsweise jeweils einen Durchbruch (59 bis 62) des befestigten Endes der zugeordneten Schleiffedern (10 bis 13) durchdringen.

10. Motor nach einem der Ansprüche 6 bis 8, dadurch gekennzeichnet, daß eine Schleiffeder (10 bis 13) mit ihrem Befestigungsende (26) von der oberen Fläche (27) des Trägers (14) aus durch diesen hindurchtritt und vorzugsweise auf der anderen Seite (33) des Trägers (14) mit einem Leiterelement (34,35,36,37) elektrisch leitend verbunden ist.

11. Motor nach Anspruch 10, dadurch gekennzeichnet, daß das Befestigungsende (26) der Schleiffeder (10 bis 13) und das Leiterelement (34 bis 37) flach aneinander anliegen.

12. Motor nach Anspruch 11, dadurch gekennzeichnet, daß das Befestigungsende (26) der Schleiffeder (10 bis 13) an einem hochgestellten Lappen (90) des Leiterelements (34 bis 37) anliegt.

13. Motor nach einem der Ansprüche 9 bis 12, dadurch gekennzeichnet, daß die Kontaktstelle zwischen dem Befestigungsende (26) der Schleiffeder (10 bis 13) und dem Leiterelement (34 bis 37) gelötet ist.

14. Motor nach wenigstens einem der Ansprüche 6 bis 13, dadurch gekennzeichnet, daß in montierter Lage vom Gehäuseboden (8) wegweisende, angeformte, hülsenartige Ausstülpungen (z.B. 39 bis 41) elektrische Verbindungselemente für die Entstörmittel (16 bis 19) bilden, deren Anschlußdrähte in die hülsenformigen Ausstülpungen eingreifen oder sie durchsetzen.

## Claims

1. An electric motor, in particular for driving at least one windshield wiper of a motor vehicle, the motor shaft (3) of which drives a toothed wheel (7) of the wiper drive rotatably mounted in a housing, the toothed wheel carrying concentric, electrically conductive contact paths for maintaining the current supply of the motor until its deactivation in a predetermined position of the wiper drive shaft (4), a brush collector (10 to 13) being associated with each of the contact paths, the brush collectors (10 to 13) and anti-interference means (16 to 19) and electric connecting elements (20 to 23) for the motor being adapted to be preassembled on an electrically non-conductive carrier (14), and the substantially plate-shaped carrier (14) including the preassembled brush collectors (10 to 13), connecting elements (20 to 23) and anti-interfeence means (16 to 19) being arranged in a clearance (25) between the toothed wheel (7) and the bottom (8) of the housing (1),
**characterized** in that the base portions of the brush collectors (10 to 13) are arranged at the top surface of the carrier (14) pointing to the bottom of the housing (8), and the brush collectors themselves extend through apertures (29 to 32) of the carrier, while on the bottom surface (33) of the carrier (14) plane conductor elements (34 to 38), made of sheet metal, are formed, by which the anti-interference means (16 to 19), the brush collectors (10 to 13) and the electric connecting elements (20 t0 23) are connected in an electrically conductive manner.

2. A motor as claimed in claim 1,
**characterized** in that the plate-shaped carrier (14) is substantially provided as an annular disc, and the housing (1) has a circle-cylindrical inner wall of corresponding size in this area.

3. A motor as claimed in claim 1 or 2,
**characterized** in that axially projecting, in particular shaped receiving means (24, 72 to 79) for the anti-interference means (16 to 19), the attaching end (26) of each brush collector (10 to 13) and the electric connecting elements (20 to 23) are arranged on the top surface (27) of the carrier( 14).

4. A motor as claimed in claim 3,
**characterized** in that the receiving means for the electric connecting elements (20 to 23) are joined to form a plug board (24), with free ends of the electric connecting elements (20 to 23), formed as tabs, projecting axially over the free end of the plug board.

5. A motor as claimed in claim 3 or 4,
**characterized** in that the receiving means for the electric connecting elements (20 to 23) or the plug board (24), respectively, penetrate(s) the housing bottom (8) slightly outwardly.

6. A motor as claimed in any one of the preceding claims,
**characterized** in that all conductor elements (34 to 38) and the preferably electric connecting elements (20 to 23) are punched from one single sheet-metal plate, and the conductor elements (34 to 38) of the loose punched part are interconnected by separable webs (42 to 53, 58).

7. A motor as claimed in claim 6,
**characterized** in that each conductor element (34 to 38) includes at least one attaching hole (for example, 54, 55) into which an attaching element (for example, 56, 57) engages, in particular a shaped attaching peg of the carrier (14), the projecting end of which is deformed to a rivet head, or the like.

8. A motor as claimed in claim 6 or 7,
**characterized** in that bent tabs of the conductor elements (34 to 38), which project towards the housing bottom (8) in the mounted position, form the electric connecting elements (20 to 23).

9. A motor as claimed in any one of claims 6 to 8,
**characterized** in that tabs (67 to 70) which project towards the housing bottom (8) in the mounted position form electric connecting elements to the brush collectors (10 to 13), the tabs (67 to 70), preferably, extending through an aperture (59 to 62) in each of the attached ends of the associated brush collectors (10 to 13).

10. A motor as claimed in any one of claims 6 to 8,
**characterized** in that a brush collector (10 to 13) extends with its attaching end (26) from the top surface (27) of the carrier (14) through the carrier and is connected to a conductor element (34, 35, 36, 37) in an electrically conductive manner, preferably, on the other side (33) of the carrier (14).

11. A motor as claimed in claim 10,
**characterized** in that the attaching end (26) of the brush collector (10 to 13) and the conductor element (34 to 37) are in plane abutment on each other.

12. A motor as claimed in claim 11,
**characterized** in that the attaching end (26) of the brush collector (10 to 13) bears against an erected tab (90) of the conductor element (34 to 37).

13. A motor as claimed in any one of claims 9 to 12,
**characterized** in that the point of contact between the attaching end (26) of the brush collector (10 to 13) and the conductor element (34 to 37) is soldered.

14. A motor as claimed in any one of claims 6 to 13,
**characterized** in that, in the mounted position, sleeve-shaped protuberances (for example, 39 to 41), which point away from the housing bottom, form electric connecting elements for the anti-interference means (16 to 19), the connecting wires of which engage into or extend through the sleeve-shaped protuberances.

## Revendications

1. Moteur électrique, notamment pour l'entraînement d'au moins un essuie-glace d'un véhicule automobile, dont l'arbre moteur (3) entraîne une roue dentée (7) du mécanisme d'entraînement de l'essuie-glace, logée de façon rotative dans un carter (1), portant des pistes de contact concentriques, électriquement conductrices destinées à maintenir l'alimentation en courant du moteur jusqu'à l'arrêt de celui-ci dans une position prédéfinie de l'arbre d'entraînement (4) de l'essuie-glace, pistes auxquelles est associée respectivement un balai de contact (10 à 13), les balais de contact (10 à 13) et moyens antiparasites (16 à 19) ainsi que les éléments de raccordement électrique (20 à 23) du moteur pouvant être pré-montés sur un support (14) électriquement non-conducteur, et le support (14), qui présente essentiellement une forme de plateau, ainsi que les balais de contact (10 à 13), les éléments de raccordement (20 à 23) et les moyens antiparasites (16 à 19) pré-montés sur celui-ci, étant logés dans un intervalle (25) compris entre la roue dentée (7) et le fond (8) du carter (1),
caractérisé en ce que les sections de base des balais de contact (10 à 13) sont disposées sur la face supérieure du support (14) tournée vers le fond du carter (8), et en ce que les balais de contact eux-mêmes traversent des lumières (29 à 32) ménagées dans ce support, alors qu'à la face inférieure (33) du support (14) se situent des éléments conducteurs plans (34 à 38) formés en tôle, par l'intermédiaire desquels les moyens antiparasites (16 à 19), les balais de contact (10 à 13) et les éléments de raccordement électrique (20 à 23) sont reliés les uns aux autres de manière électriquement conductrice.

2. Moteur selon la revendication 1, caractérisé en ce que le support (14) en forme de plateau est réalisé essentiellement sous forme d'un disque annulaire, et que le carter (1) comporte, dans cette zone, une paroi cylindrique circulaire de taille correspondante.

3. Moteur selon la revendication 1 ou 2, caractérisé en ce que des logements (24, 72 à 79) saillant axialement, notamment formés d'un seul tenant avec le support, prévus pour les moyens antiparasites (16 à 19), l'extrémité de fixation (26) de chaque balai de contact (10 à 13) et les éléments de raccordement électrique (20 à 23), sont situés à la face supérieure (27) du support (14).

4. Moteur selon la revendication 3, caractérisé en ce que les logements pour les éléments de raccordement électrique (20 à 23) sont réunis en une barrette de raccordement (24), les extrémités libres des éléments de raccordement électrique (20 à 23), formant des languettes, saillant axialement au-delà de l'extrémité libre de la barrette.

5. Moteur selon la revendication 3 ou 4, caractérisé en ce que les logements pour les éléments de raccordement électrique (20 à 23) ou la barrette de raccordement (24) traversent le fond (8) du carter en dépassant légèrement vers l'extérieur.

6. Moteur selon l'une au moins des revendications précédentes, caractérisé en ce que tous les éléments conducteurs (34 à 38) et de préférence les éléments de raccordement électrique (20 à 23) sont découpés dans une seule plaque de tôle, les éléments conducteurs (34 à 38) détaches de la pièce découpée étant reliés les uns aux autres via des traverses (42 à 53, 58) pouvant être sectionnées.

7. Moteur selon la revendication 6, caractérisé en ce que chaque élément conducteur (34 à 38) comporte au moins un trou de fixation (p.ex.54, 55), dans lequel s'engage un élément de fixation (p.ex.56, 57), notamment un tenon du support (14) formé d'un seul tenant avec celui-ci, dont la tête est déformée en une tête de rivet ou similaire.

8. Moteur selon la revendication 6 ou 7, caractérisé en ce que des languettes des éléments conducteurs (34 à 38), repliées et saillant par rapport au fond (8) du carter, en position montée, constituent les éléments de raccordement électrique (20 à 23).

9. Moteur selon l'une des revendications 6 à 8, caractérisé en ce que des languettes (67 à 70) des éléments conducteurs, saillant par rapport au fond (8) du carter, en position montée, constituent les éléments de raccordement électrique pour les balais de contact (10 à 13), les languettes (67 à 70) traversant de préférence une lumière (59 à 62) ménagée dans l'extrémité fixée du balai de contact associé (10 à 13).

10. Moteur selon l'une des revendications 6 à 8, caractérisé en ce qu'un balai de contact (10 à 13) traverse, par son extrémité de fixation (26), le support (14), depuis la face supérieure (27) de celui-ci, et est de préférence relié, de façon électriquement conductrice, à un élément conducteur (34, 35, 36, 37) de l'autre côté (33) du support (14).

11. Moteur selon la revendication 10, caractérisé en ce que l'extrémité de fixation (26) du balai de contact (10 à 13) et l'élément conducteur (34 à 37) s'appuient à plat l'un sur l'autre.

12. Moteur selon la revendication 11, caractérisé en ce que l'extrémité de fixation (26) du balai de contact (10 à 13) s'appuie sur une languette (90) repliée vers le haut de l'élément conducteur (34 à 37).

13. Moteur selon l'une des revendications 9 à 12, caractérisé en ce que le point de contact entre l'extrémité de fixation (26) du balai de contact (10 à 13) et l'élément conducteur (34 à 37) est soudé.

14. Moteur selon l'une au moins des revendications 6 à 13, caractérisé en ce qu'en position montée, des bossages attenants en forme de douilles (p.e. 39 à 41), dirigés vers l'opposé du fond (8) du carter, constituent les éléments de raccordement électrique pour les moyens antiparasites (16 à 19), dont les fils de raccordement s'engagent dans les bossages en forme de douilles ou traversent celles-ci.
